# EUROPÄISCHE PATENTANMELDUNG

(11) **EP 1 707 438 A1**
(43) Veröffentlichungstag der Anmeldung: **04.10.2006**
(21) Anmeldenummer: 06006517.4
(22) Anmeldetag: 29.03.2006
(51) Int. Cl.: B60Q 1/08

(54) **Kraftfahrzeug mit einer Beleuchtungseinrichtung mit veränderbarem Ausleuchtvolumen**

(30) Priorität: 01.04.2005 DE 102005014953
(71) Anmelder: AUDI AG, 85045 Ingolstadt (DE)
(72) Erfinder: Taner, Anil, 85057 Ingolstadt (DE)
(74) Vertreter: Thielmann, Frank

(57) **Zusammenfassung**

Kraftfahrzeug mit einer Beleuchtungseinrichtung (3) umfassend ein Steuergerät und eine über das Steuergerät (7) zum Ausleuchten des Fahrzeugvorfelds ansteuerbare Leuchteinrichtung (3), über die einzelne unterschiedliche, einander ergänzende Ausleuchtbereiche (4) ausleuchtbar sind, die in ihrer Gesamtheit das Ausleuchtvolumen der Leuchteinrichtung (3) bilden, wobei die einzelnen Ausleuchtbereiche (4) selektiv steuerbar sind und wobei eine Einrichtung zur Ermittlung der Position (6) eines im Umfeld des Kraftfahrzeugs befindlichen anderen Verkehrsteilnehmers, insbesondere eines anderen Kraftfahrzeugs, relativ zum eigenen Kraftfahrzeug (1) vorgesehen ist, und dass die Leuchteinrichtung (3) zum Verändern des Ausleuchtvolumens oder dessen Ausleuchtcharakteristik in Abhängigkeit der ermittelten Position steuerbar ist.

## Beschreibung

Die vorliegende Erfindung betrifft ein Kraftfahrzeug mit einer Beleuchtungseinrichtung, umfassend ein Steuergerät und eine über das Steuergerät zum Ausleuchten des Fahrzeugsvorfelds ansteuerbare Leuchteinrichtung, über die einzelne unterschiedliche, einander ergänzende Ausleuchtbereiche ausleuchtbar sind, die in ihrer Gesamtheit das Ausleuchtvolumen der Leuchteinrichtung bilden, wobei die einzelnen Ausleuchtbereiche selektiv steuerbar sind.

Fernlicht und Abblendlicht sind etablierte Ausleuchtvarianten jedes modernen Kraftfahrzeugs. Das Fernlicht wird besonders vorteilhaft von Fahrern genutzt, wenn es in der Umgebung des Kraftfahrzeugs sehr dunkel ist. Dabei tritt jedoch häufig das Problem auf, dass andere Verkehrsteilnehmer im Vorfeld des Kraftfahrzeugs durch das Fernlicht geblendet werden. Hierdurch kommt es häufig zu Unfällen. Der Fahrer soll daher zur Sicherheit, wenn er einen anderen Verkehrsteilnehmer erblickt, auf das Abblendlicht zurückschalten. Dies führt vor allem bei unübersichtlichen Fahrstrecken zu einem häufigen Hin- und Herschalten zwischen Abblendlicht und Fernlicht, was eine hohe Konzentration des Fahrers erfordert. Außerdem kann ihn dies leicht von anderen sicherheitsrelevanten Informationen ablenken.

Es sind verschiedene Systeme zur Erkennung anderer Verkehrsteilnehmer im Fahrzeugumfeld bekannt. Viele Fahrerassistenzsysteme umfassen Bildaufnahmeeinrichtungen, die nach Verarbeitung aufgenommener Bilder Hinweise und Warninformationen auf einem Display ausgeben können. Informationen über das Vorhandensein anderer Verkehrsteilnehmer im Fahrzeugumfeld können auch durch sensorbasierte Systeme wie z.B. Radarsensoren gewonnen werden. In der sogenannten "x-to-car"-Communication kann ein anderer Verkehrsteilnehmer x, insbesondere ein anderes Kraftfahrzeug, ein Fahrrad oder ein Fußgänger, eine Positionsinformation an das eigene Kraftfahrzeug senden. Auch diese Information wird dann auf einem Display ausgegeben. Da der Fahrer nun aber auch dieses Display beachten muss, ist er zusätzlich belastet.

Daher wurde vorgeschlagen, bei Erkennung eines anderen Verkehrsteilnehmers im Vorfeld des Kraftfahrzeuges automatisch von Fern- auf Abblendlicht umzuschalten. Diese Umschaltung hat zum einen den Nachteil, dass der Fahrer durch häufiges, plötzliches Hin- und Herschalten irritiert wird. Zum anderen gehen die Vorteile des Fernlichts in einer dunklen Umgebung während der Zeit, in der mit Abblendlicht gefahren wird, verloren.

Der Erfindung liegt daher die Aufgabe zugrunde, ein Kraftfahrzeug anzugeben, dass es dem Fahrer erlaubt, ohne zusätzliche Belastung ständig mit Fernlicht zu fahren, ohne dass andere Verkehrsteilnehmer geblendet werden.

Zur Lösung dieser Aufgabe ist bei einem Kraftfahrzeug der eingangs genannten Art vorgesehen, dass eine Einrichtung zur Ermittlung der Position wenigstens eines im Umfeld des Kraftfahrzeugs befindlichen anderen Verkehrsteilnehmers, insbesondere eines anderen Kraftfahrzeugs, relativ zum eigenen Kraftfahrzeug vorgesehen ist, und dass die Leuchteinrichtung zum Verändern des Ausleuchtvolumens oder dessen Ausleuchtcharakteristik in Abhängigkeit der ermittelten Position steuerbar ist.

Durch die Verwendung einer frei programmierbaren Ausleuchtcharakteristik entsteht dem Fahrer also der Vorteil, dass er ständig mit Fernlicht fahren kann und weiterhin das Vorfeld des Kraftfahrzeuges hervorragend erkennen kann, da nur die Ausleuchtbereiche, in denen sich der andere Verkehrsteilnehmer befindet, ausgeblendet werden (es wird also das Volumen geändert) oder gedimmt werden (es wird die Ausleuchtcharakteristik im Volumen variiert). Vorausfahrende wie entgegenkommende Verkehrsteilnehmer werden nicht mehr geblendet. Auch ist kein zusätzliches Warnelement mehr erforderlich, und der Fahrer wird nicht zusätzlich belastet. Auch eine Irritation des Fahrers durch plötzliche starke Veränderungen des Ausleuchtvolumens oder der Ausleuchtcharakteristik wird somit ausgeschlossen.

Vorteilhafterweise umfasst die Beleuchtungseinrichtung wenigstens eine Bildaufnahmevorrichtung oder der Beleuchtungseinrichtung ist wenigstens eine Bildaufnahmevorrichtung zugeordnet. Die Bildaufnahmevorrichtung kann eine CCD-Kamera und/oder eine CMOS-Kamera und/oder eine Infrarotkamera und/oder eine Nachtsichtkamera umfassen. Heutige Bildauflösungssysteme ermöglichen insbesondere eine eindeutige Erkennung anderer Kraftfahrzeuge. Eine CCD-Kamera und eine CMOS-Kamera bieten den zusätzlichen Vorteil, dass bei Dunkelheit andere Verkehrsteilnehmer leicht durch das Licht ihrer Scheinwerfer erkennbar sind.

Eine weitere vorteilhafte Ausgestaltung der vorliegenden Erfindung ist dadurch gekennzeichnet, dass die Einrichtung eine Empfangseinrichtung umfasst, die zum Empfangen einer von dem anderen Verkehrsteilnehmer gesendeten Positionsinformation ausgebildet ist. Dies ist eine Realisierung der "x-to-car"-Kommunikation, die in Zukunft eine größere Bedeutung erlangen könnte. Zusätzlich kann das Steuergerät zur Umrechnung einer relativen Position, die in der gesendeten Positionsinformation enthalten ist, in das relative Bezugssystem des eigenen Kraftfahrzeugs ausgebildet sein. In diesem Falle können also Messergebnisse der Sensorik eines anderen Verkehrsteilnehmers zum eigenen Vorteil weiter verarbeitet werden.

Von besonderem Vorteil ist es, wenn die Beleuchtungseinrichtung eine Einrichtung zum Feststellen einer absoluten Position des eigenen Kraftfahrzeugs umfasst und das Steuergerät zur Berechnung einer Position des anderen Verkehrsteilnehmers relativ zum eigenen Fahrzeug aus der absoluten Position des eigenen Kraftfahrzeugs und der von dem anderen Verkehrsteilnehmer gesendeten Positionsinformation ausgebildet ist. Einrichtungen zum Bestimmen einer absoluten, globalen Position des Kraftfahrzeugs sind heute vielfach schon in Navigationssystemen enthalten. Diese Informationen können dann zusätzlich in der "x-to-car" Kommunikation weiter verwendet werden. Die vom anderen Verkehrsteilnehmer gesendete Positionsinformation kann GPS-Koordinaten umfassen und die Einrichtung zum Feststellen einer absoluten Position des eigenen Kraftfahrzeugs kann eine GPS-Einrichtung umfassen.

Vorteilhafterweise umfasst die Beleuchtungseinrichtung wenigstens einen Radarsensor oder der Beleuchtungseinrichtung ist wenigstens ein Radarsensor zugeordnet. Radarsensoren sind gut zur Bestimmung einer Position eines anderen Verkehrsteilnehmers geeignet, und liefern vor allem genaue Abstandsinformationen. Besonders vorteilhaft sind Radarsensoren mit einer Bildaufnahmevorrichtung kombiniert.

Zur Realisierung der frei programmierbaren Ausleuchtcharakteristik kann ein LED-Array mit mehreren matrixartig angeordneten, separat ansteuerbaren LED's als Teil der Leuchteinrichtung vorgesehen sein. Alternativ kann die Leuchteinrichtung eine Blende umfassen, die aus selektiv durch das Steuergerät verstellbaren Blenden in Matrixform aufgebaut ist und vor einem Leuchtmittel angebracht ist. Durch diese Ausführungen ist das Ansteuern der einzelnen Ausleuchtbereiche einfach gestaltet.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: den Aufbau und Betrieb eines erfindungsgemäßen Kraftfahrzeugs nach einem ersten Ausführungsbeispiel,
- Fig. 2: die wichtigsten Komponenten eines erfindungsgemäßen Kraftfahrzeugs nach einem zweiten Ausführungsbeispiel,
- Fig. 3: die wichtigsten Komponenten eines erfindungsgemäßen Kraftfahrzeugs nach einem dritten Ausführungsbeispiel,
- Fig. 4a + 4b: Prinzipskizzen eines LED-Arrays zur Verwendung im erfindungsgemäßen Kraftfahrzeug,
- Fig. 5a + 5b: Prinzipskizzen von Leuchtmittel und Blende zur Verwendung im erfindungsgemäßen Kraftfahrzeug, und
- Fig. 6a-6d: eine Bildfolge zur Erläuterung der Funktion des erfindungsgemäßen Kraftfahrzeugs.

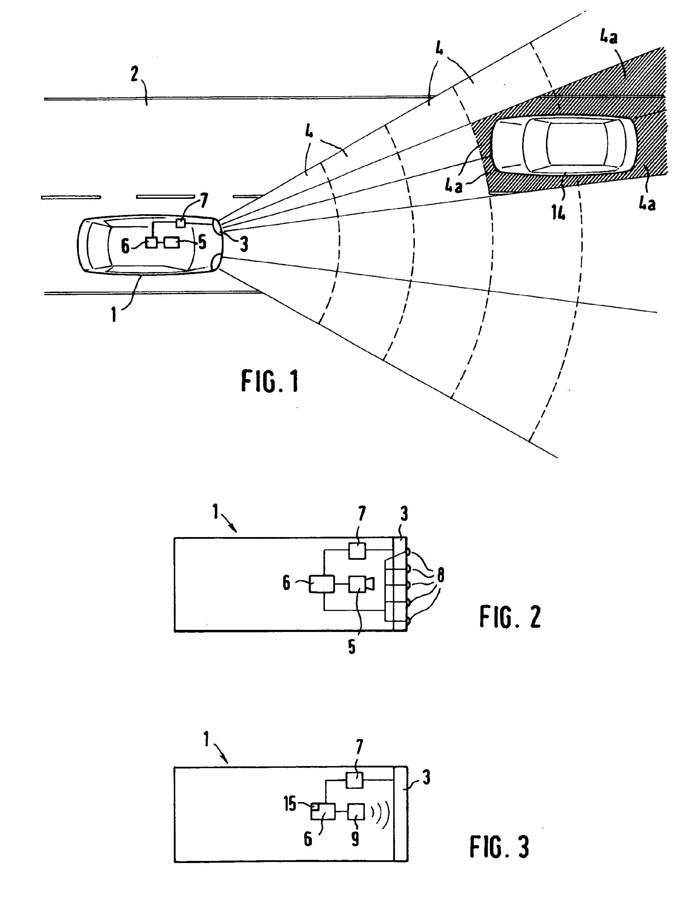

Fig. 1 zeigt ein erfindungsgemäßes Kraftfahrzeug 1 nach einem ersten Ausführungsbeispiel, das sich auf einer Straße 2 bewegt. Dass Vorfeld des Kraftfahrzeugs wird durch die Beleuchtungseinrichtung 3 ausgeleuchtet. Das gesamte Ausleuchtvolumen lässt sich in einander ergänzende Ausleuchtbereiche 4 aufteilen. Ein weiterer Verkehrsteilnehmer 14 fährt auf der Gegenspur. Die Ausleuchtbereiche 4a, in denen sich der andere Verkehrsteilnehmer 14 befindet, sind dunkel, werden also nicht beleuchtet. Das erfindungsgemäße Kraftfahrzeug 1 umfasst außerdem eine Bildaufnahmevorrichtung 5, die ein Bild des Vorfeldes des Kraftfahrzeugs 1 aufnimmt, und dieses an eine Einrichtung zur Ermittlung eines im Umfeld des Kraftfahrzeugs befindlichen anderen Verkehrsteilnehmers (Ermittlungseinrichtung 6) sendet. Die Bildaufnahmevorrichtung umfasst eine CCD-Kamera, auf der in dunkler Umgebung die Beleuchtung eines anderen Verkehrsteilnehmers leicht zu erkennen ist. Die Ermittlungseinrichtung 6 nutzt einen Bildverarbeitungsalgorithmus, um die Position anderer Verkehrsteilnehmer aus dem Bild zu bestimmen. Diese Positionsinformation wird dann an ein Steuergerät 7 übermittelt, das die Beleuchtungseinrichtung 3 steuert. Da die einzelnen Ausleuchtbereiche 4 einzeln ansteuerbar sind, kann das Steuergerät nun diejenigen Ausleuchtbereiche 4a abdunkeln, in denen nach der von der Ermittlungseinrichtung 6 übermittelten Positionsinformation sich der andere Verkehrsteilnehmer 14 befindet.

Fig. 2 zeigt die wichtigsten Komponenten eines erfindungsgemäßen Kraftfahrzeugs 1 nach einem zweiten Ausführungsbeispiel. Neben der erfindungsgemäßen Beleuchtungseinrichtung 3, der Bildaufnahmevorrichtung 5, der Ermittlungseinrichtung 6 und dem Steuergerät 7 sind hier im Bereich der vorderen Stossstange Radarsensoren 8 angebracht. Die Radarsensoren 8 liefern eine genauere Abstandsinformation zu Objekten im Vorfeld des Kraftfahrzeugs 1. Allerdings können sie keine genauen Aussagen über die Art des gemessenen Objekts machen, sodass die Kombination mit der Bildaufnahmevorrichtung 5 eine ideale Ergänzung darstellt. Sowohl die Radarsensoren 8 als auch die Bildaufnahmevorrichtung 5 senden ihre Daten an die Ermittlungseinrichtung 6, die daraus die Position eines anderen Verkehrsteilnehmers genau bestimmt und diese Positionsinformation an das Steuergerät 7 sendet, das wiederum das Ausleuchtvolumen entsprechend anpasst.

In Fig. 3 sind die wichtigsten Komponenten eines dritten Ausführungsbeispiels dargestellt. Das Kraftfahrzeug 1 enthält wiederum eine Beleuchtungseinrichtung 3, die von dem Steuergerät 7 gesteuert wird, sowie eine Ermittlungseinrichtung 6, die ihre Informationen aber nun von einer Funkeinrichtung 9 erhält. Die Funkeinrichtung 9 kann ein von einem anderen Verkehrsteilnehmer gesendetes GPS-Signal empfangen und leitet dieses an die Ermittlungseinrichtung 6 weiter. Die Ermittlungseinrichtung 6 umfasst eine eigene GPS-Einrichtung 15 und kann durch einen Vergleich der beiden absoluten Positionsinformationen eine relative Positionsinformation bezüglich eines anderen Verkehrsteilnehmers berechnen. Diese Positionsinformation wird dann an das Steuergerät 7 gesendet, dass wiederum die entsprechenden Ausleuchtbereiche abdunkeln kann.

Alternativerweise kann die Funkeinrichtung 9 auch eine relative Positionsinformation eines anderen Verkehrsteilnehmers empfangen und die Ermittlungseinrichtung 6 kann diese in das Bezugssystem des Kraftfahrzeugs 1 umrechnen und das Steuergerät 7 mit der entsprechenden Positionsinformation versorgen.

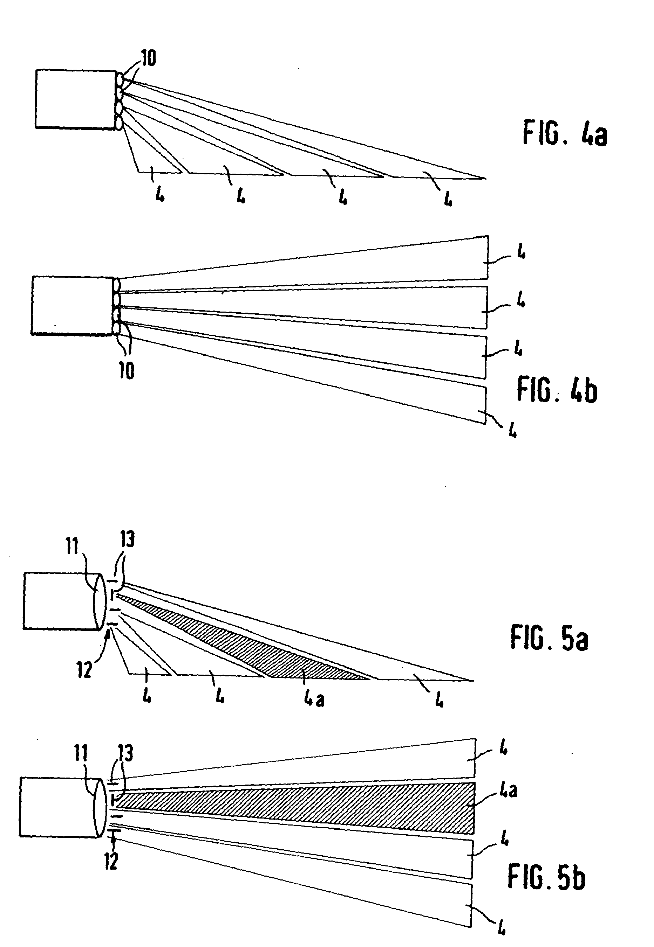

Fig. 4a zeigt eine Seitenansicht eines Scheinwerfers zur Verwendung im erfindungsgemäßen Kraftfahrzeugs, Fig. 4b eine Draufsicht des selben Scheinwerfers. Der Scheinwerfer ist aus matrixartig angeordneten LED's 10 aufgebaut. Jede der LED's 10 leuchtet einen bestimmten Bereich 4 im Vorfeld des Kraftfahrzeuges aus, wie auch in Fig. 4a und 4b dargestellt. Jede der LED's 10 kann einzeln über das Steuergerät 7 angesteuert werden. In Fig. 4a und 4b sind zur Verdeutlichung jeweils nur 4 LED's dargestellt. Es versteht sich von selbst, dass zur normalen Anwendung eine größere Zahl von LED's verwendet würde, die dann auch eine feinere Programmierbarkeit des Ausleuchtvolumens erlauben würden.

Eine weitere Ausführungsform der Schweinwerfer der Beleuchtungseinrichtung 3 ist in den Figuren 5a und 5b gezeigt. Fig. 5a zeigt wiederum eine Seitenansicht, Fig. 5b eine Draufsicht. Vor einem Leuchtmittel 11 ist eine Blende 12 angebracht, die aus matrixartig angeordneten kleinen Blenden 13 aufgebaut ist. Durch das Steuergerät 7 können die kleinen Blenden 13 selektiv geöffnet oder geschlossen werden. Jede dieser Blenden definiert nun wieder einen Ausleuchtbereich 4. Ist eine Blende geschlossen, so wird der entsprechende Bereich, 4a in Abbildung 5a und 5b, nicht mehr ausgeleuchtet. Zur Verdeutlichung wurden hier nur vier Blenden eingezeichnet, es ist jedoch für den Fachmann klar, dass in der Anwendung eine größere Zahl von Blenden möglich ist. Damit wird das Ausleuchtvolumen des Kraftfahrzeugs 1 noch feiner programmierbar.

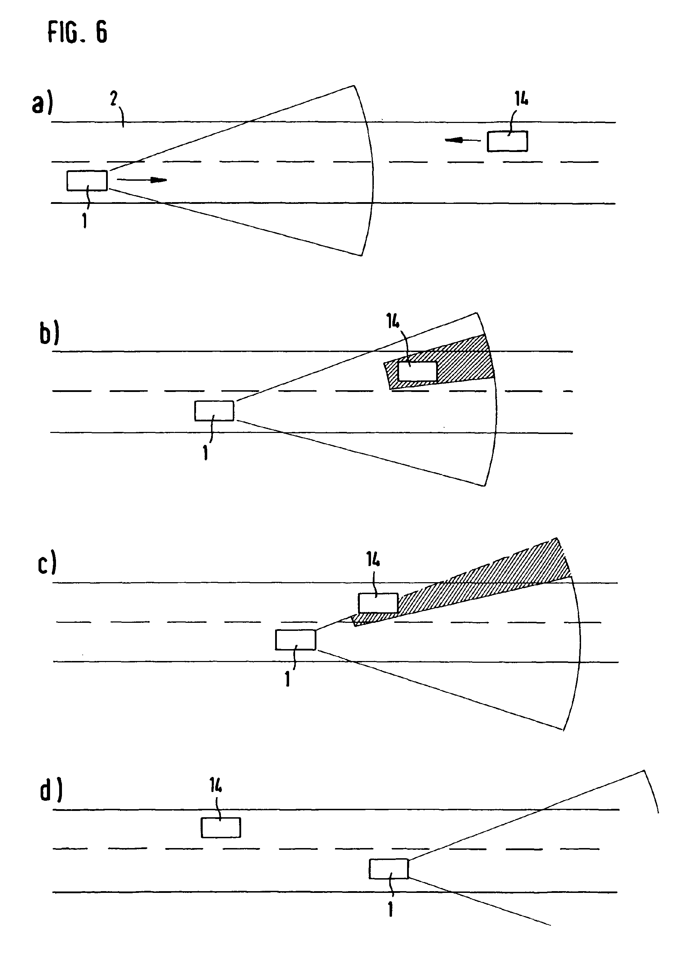

Die Figuren 6a bis 6d sind eine Bildfolge, die die Vorgänge während einer Begegnung mit einem anderen Verkehrsteilnehmer bei eingeschaltetem Fernlicht erläutern. Das erfindungsgemäße Kraftfahrzeug 1 fährt auf einer Straße 2. Ein anderer Verkehrsteilnehmer 14 kommt ihm dabei entgegen. In Fig. 6a befindet sich der andere Verkehrsteilnehmer 14 noch weit außerhalb des Ausleuchtvolumens des Kraftfahrzeugs 1. Jeder Ausleuchtbereich 4 ist also ausgeleuchtet, das bedeutet, dass alle LED's 10 in vollem Betrieb sind beziehungsweise alle kleinen Blenden 13 geöffnet sind.

In Fig. 6b stellt die Ermittlungseinrichtung 6 fest, dass der andere Verkehrsteilnehmer 14 sich an einer Position innerhalb des maximalen Ausleuchtvolumens des Kraftfahrzeugs 1 befindet. Diese Positionsdaten werden an das Steuergerät 7 gesendet, welches den Bereich, den der andere Verkehrsteilnehmer 14 einnimmt, aus dem Ausleuchtvolumen durch entsprechende Anweisungen an die Beleuchtungseinrichtung 3 ausnimmt. Das bedeutet, dass entweder einige der LED's 10 ausgeschaltet oder gedimmt sind, oder einige der kleinen Blenden 13 geschlossen sind.

In Fig. 6c hat sich der andere Verkehrsteilnehmer 14 innerhalb des maximalen Ausleuchtvolumens des Kraftfahrzeugs 1 weiter bewegt. Seine relative Position ist nun eine andere, die von der Ermittlungseinrichtung 6 festgestellt wurde und an das Steuergerät 7 gesendet wurde. Somit ist nun ein anderer Bereich des maximalen Ausleuchtvolumens durch Ausschalten oder Dimmen der LED's 10 oder Schließen der kleinen Pixelblenden 13 abgedunkelt. Die in Fig. 6b ausgeschalteten oder gedimmten LED's leuchten nun wieder in voller Helligkeit, beziehungsweise die in Fig. 6b geschlossenen kleinen Blenden wurden wieder geöffnet.

In Fig. 6d hat der andere Verkehrsteilnehmer 14 das maximale Ausleuchtvolumen des Kraftfahrzeugs 1 wieder verlassen, sodass alle LED's 10 wieder ihre maximale Leuchtstärke haben beziehungsweise alle kleinen Blenden 13 wieder geöffnet sind.

## Patentansprüche

1. Kraftfahrzeug mit einer Beleuchtungseinrichtung (3) umfassend ein Steuergerät und eine über das Steuergerät (7) zum Ausleuchten des Fahrzeugvorfelds ansteuerbare Leuchteinrichtung (3), über die einzelne unterschiedliche, einander ergänzende Ausleuchtbereiche (4) ausleuchtbar sind, die in ihrer Gesamtheit das Ausleuchtvolumen der Leuchteinrichtung (3) bilden, wobei die einzelnen Ausleuchtbereiche (4) selektiv steuerbar sind,
**dadurch gekennzeichnet,**
**dass** eine Einrichtung zur Ermittlung der Position (6) eines im Umfeld des Kraftfahrzeugs befindlichen anderen Verkehrsteilnehmers, insbesondere eines anderen Kraftfahrzeugs, relativ zum eigenen Kraftfahrzeug (1) vorgesehen ist, und dass die Leuchteinrichtung (3) zum Verändern des Ausleuchtvolumens oder dessen Ausleuchtcharakteristik in Abhängigkeit der ermittelten Position steuerbar ist.

2. Kraftfahrzeug nach Anspruch 1,
**dadurch gekennzeichnet,**
**dass** die Beleuchtungseinrichtung (3) wenigstens eine Bildaufnahmevorrichtung (5) umfasst oder der Beleuchtungseinrichtung (3) wenigstens eine Bildaufnahmevorrichtung (5) zugeordnet ist.

3. Kraftfahrzeug nach Anspruch 2,
**dadurch gekennzeichnet,**
**dass** die Bildaufnahmevorrichtung (5) eine CCD-Kamera und/oder eine CMOS-Kamera und/oder eine Infrarotkamera und/oder eine Nachtsichtkamera umfasst.

4. Kraftfahrzeug nach einem der vorangehenden Ansprüche,
**dadurch gekennzeichnet,**
**dass** die Einrichtung eine Empfangseinrichtung (9) umfasst, die zum Empfangen einer von dem anderen Verkehrsteilnehmer gesendeten Positionsinformation ausgebildet ist.

5. Kraftfahrzeug nach Anspruch 4,
**dadurch gekennzeichnet,**
**dass** das Steuergerät (7) zur Umrechnung einer relativen Position, die in der gesendeten Positionsinformation enthalten ist, in das relative Bezugssystem des eigenen Kraftfahrzeugs (1) ausgebildet ist.

6. Kraftfahrzeug nach einem der Ansprüche 4 oder 5,
**dadurch gekennzeichnet,**
**dass** die Beleuchtungseinrichtung (3) eine Einrichtung (15) zum Feststellen einer absoluten Position des eigenen Kraftfahrzeugs (1) umfasst und das Steuergerät (7) zur Berechnung einer Position des anderen Verkehrsteilnehmers relativ zum eigenen Fahrzeug (1) aus der absoluten Position des eigenen Kraftfahrzeugs (1) und der von dem anderen Verkehrsteilnehmer gesendeten Positionsinformation ausgebildet ist.

7. Kraftfahrzeug nach Anspruch 6,
**dadurch gekennzeichnet,**
**dass** die von dem anderen Verkehrsteilnehmer gesendete Positionsinformation GPS-Koordinaten umfasst und die Einrichtung (15) zum Feststellen einer absoluten Position des eigenen Kraftfahrzeugs (1) eine GPS-Einrichtung umfasst.

8. Kraftfahrzeug nach einem der vorangehenden Ansprüche,
**dadurch gekennzeichnet,**
**dass** die Beleuchtungseinrichtung (3) wenigstens einen Radarsensor (8) umfasst, oder der Beleuchtungseinrichtung (3) wenigstens ein Radarsensor (8) zugeordnet ist.

9. Kraftfahrzeug nach einem der vorherigen Ansprüche,
**dadurch gekennzeichnet,**
**dass** die Leuchteinrichtung (3) ein LED-Array mit mehreren matrixartig angeordneten, separat ansteuerbaren LED's (10) umfasst.

10. Kraftfahrzeug nach einem der vorangehenden Ansprüche,
**dadurch gekennzeichnet,**
**dass** die Leuchteinrichtung (3) eine Blende (12) umfasst, die aus selektiv durch das Steuergerät (7) verstellbaren Blenden (13) in Matrixform aufgebaut ist und vor einem Leuchtmittel (11) angebracht ist.
